Europäisches Patentamt

European Patent Office

Office européen des brevets

(11) Publication number: **0 300 104 B1**

# EUROPEAN PATENT SPECIFICATION

(45) Date of publication of patent specification: **09.09.92**

(51) Int. Cl.⁵: **B32B 7/06**, C09J 7/00, C08L 23/08, C08L 51/06

(21) Application number: **87306581.7**

(22) Date of filing: **24.07.87**

(54) **Peelable seals using polybutylene.**

(43) Date of publication of application:
**25.01.89 Bulletin 89/04**

(45) Publication of the grant of the patent:
**09.09.92 Bulletin 92/37**

(84) Designated Contracting States:
**AT BE CH DE FR GB IT LI LU NL SE**

(56) References cited:
**EP-A- 0 178 061**
**US-A- 4 189 519**

(73) Proprietor: **SHELL OIL COMPANY**
**900, Louisiana**
**Houston Texas 77001(US)**

(72) Inventor: **HWO, Charles Chiu-Hsiung**
**2710 Sugarwood Drive**
**Sugarland Texas 77478(US)**

(74) Representative: **Myerscough, Philip Boyd et al**
**J.A.Kemp & Co. 14, South Square Gray's Inn**
**London, WC1R 5EU(GB)**

EP 0 300 104 B1

**Description**

The present invention concerns polymer blends and films made therefrom.

A conventional and widely used method of packaging utilizes a synthetic resinous film, which is disposed about the produce and heat sealed to enclose it therewithin. In many instances, it is desirable to open the package by peeling apart the sealed films, and this must generally be done without destroying the integrity of the film itself. Accordingly, to provide a satisfactory package of this type, a balance of properties is necessary, i.e. the seal strength must be adequate to maintain the package in a closed and protective condition, while also exhibiting release properties as will permit opening by peeling when desired.

The invention relates to blends, and to films and laminates, especially flexible film packages made therefrom. Seals produced from these heat-sealable films and/or laminates has a nearly constant peel strength over an extended heat seal temperature range and are peelable. The term "peelable" refers to a film having seal failure occur primarily at the interface of the sealing surfaces, rather than film tearing. The blends, film and/or laminates of the present invention permit the manufacture of a more consistent finished product, having a seal of predictable and constant peel strength, in spite of inevitable variations in the heat seal temperatures used in the production of such packages.

US-A-4,189,519 describes a heat sealable resin blend comprising at least two components, about 50 to 90 weight percent of a copolymer of about 80 to 96 weight percent ethylene and about 4 to 20 weight percent of an ethylenically unsaturated ester, and about 50 to 10 weight percent polybutylene (preferably high molecular weight polybutylene). This blend produces a peelable seal having a heat sealing temperature of about 160 to 300°F (71 to 149°C) and a peel strength of about 0.3 to 3 pounds per inch (53 to 530 N/m).

The copolymer can contain about 12 to 14 weight percent of vinyl acetate or, alternatively, the copolymer can be a copolymer containing about 4.5 weight percent of vinyl acetate in a blend containing a graft copolymer of an unsaturated, fused ring, carboxylic acid anhydride upon a high density polyethylene. The polybutylene employed in making the heat sealable resin blend is a flexible, crystalline isotactic polymer having a density of about 0.91 and a melt index of 0.4 to 20, desirably about 1.0.

US-A-3,817,812 describes heat sealable packaging films, such as films for packaging food stuffs, which include 20 to 40 percent by weight polybutene-1 and about 80 to 60 percent by weight of an ethylene/vinyl acetate copolymer consisting of about from 5 to 28 percent vinyl acetate.

EP-A-178 061, US-A-4,550,141, US-A-4,539,263, US-A-4,414,053 and US-A-3,879,492 describe heat sealable films capable of forming peel seals.

None of these various references describes a method of blending a separate tie layer with the components of the film to form an intimate packaging film structure, without the equipment needed to dispose the tie layer adhesive on the substrate. The present invention is concerned with a method of blending the separate tie layer adhesive with the components of the film such that the equipment needed to dispose the tie layer adhesive on the substrate is no longer necessary. The present invention appreciates that conventional multilayer peelable seal films or sheets are comprised of substrates and peelable sealants which are generally not chemically compatible. Delamination layers when the sealed layers are pulled apart can be avoided by the present invention which utilizes a tie adhesive to bind incompatible substances with sealants without the need for additional equipment to bind the adhesive between the sealant and the substrate. This reduces manufacturing costs for producing peelable seals.

A need has long existed for a blend which can be used to make a peelable seal which can be blended with the tie layer adhesive of the film prior to extrusion, thereby reducing the cost of making easy opening peelable seals.

Accordingly the present invention provides, a composition suitable for producing a peelable heat seal between substrates, consisting essentially of a blend of:

a) 6 to 25 percent, preferably 8 to 20 percent, especially 10 to 20 percent, polybutylene having a melt index of 0.1 to 500;

b) 2 to 15 percent, preferably 3 to 20 percent, especially 3 to 10 percent, polypropylene; and

c) 60 to 92 percent, preferably 70 to 89 percent, especially 70 to 87 percent, of a copolymer of ethylene and vinyl acetate modified with an unsaturated carboxylic acid or anhydride (modified EVA) or a low density polyethylene modified with an unsaturated carboxylic acid or anhydride (modified LDPE); all percentages being by weight and totalling 100 percent.

When such a blend containing a modified EVA is coated onto a nylon substrate using sealing jaws at a heat sealing temperature of 320°F to 410°F (160°C to 210°C), preferably 350°F to 400°F (177°C to 204°C), as determined at the sealing jaws, a peel strength of 0.4 to 5 pounds per inch (70 to 876 N/m), preferably 1.0 to 3.2 pounds per inch (175 to 560 N/m), between blend layers sealed at the heat sealing temperature can readily be obtained. When the same modified EVA-containing blend is coated onto a polycarbonate substrate using sealing jaws at a heat sealing temperature of 250°F to 330°F (121°C to 166°C), preferably 280°F to 320°F (138°C to 160°C), as determined at the sealing jaws, a peel strength of 0.3 to 9 pounds per inch (53 to 1577 N/m), preferably 1.0 to 8 pounds per inch (175 to 1400 N/m), between blend layers sealed at the heat sealing temperature can readily be obtained.

The present invention also provides a heat-sealable film comprising a coextrudate, or laminate, of a substrate which is a nylon or a polycarbonate and a heat sealing blend as defined above.

The term "sealing jaws" refers to the sealing jaws used to provide a sealing joint. The temperature at the sealing jaws is determined at the time of sealing. In use the sealing joints are moved together, for example by hydraulic means, and the temperature of the film between them is measured, for example by a pyrometer or thermocouple.

The term "polybutylene" refers to butene-1 homopolymer and butene-1 copolymers such as butene-1/ethylene copolymer and butene-1/propylene copolymer.

The term "polypropylene" refers to polymers derived from propylene, commonly represented as $CH_3-CH=CH_2$. The polypropylene ingredient of the blends of the invention improves the processability of the blends, acts as an extender, and improves the optical properties of the blends.

The term "polyethylene" refers to polymers derived from ethylene, commonly represented as $CH_2=CH_2$, including ethylene α-olefin copolymers wherein the α-olefin moiety has 4 to 12 carbon atoms.

Modified EVA and LDPE resins can be prepared by modifying the polymerisation procedure, for example by including a copolymerisable unsaturated carboxylic acid or anhydride thereof such as maleic anhydride, in the (co)polymerisation reaction mixture, or by modifying an EVA or LDPE resin, for example by graft polymerisation. A resin can be treated with, for example, a peroxide or radiation to generate active sites for the introduction of functional groups.

The term "EVA" refers to copolymers of ethylene and vinyl acetate.

The term "modified EVA" includes commercialized adhesives such as Plexar (Trade Mark) type modified EVA materials made by Norchem Inc., Rolling Meadows, Illinois, and Admer-type modified EVA materials made by Mitsui Petrochemical Industries, Ltd., Tokyo, Japan. Plexar resins were formerly commercially available from Chemplex Company (now called Norchem) and are described in US-A-4,087,587 and US-A-4,087,588.

The term "modified low density polyethylene" includes resins such as Plexar polyethylenes or Admer polyethylene, having a melt index of 1 to 5, in particular about 1.7, and a density of 0.91 $g/cm^3$ to 0.93 $g/cm^3$, preferably 0.92 $g/cm^3$.

These modified EVA or low density polyethylene resins are generally extrudable polyolefin adhesives and are capable of bonding two dissimilar material. The modified EVA or modified low density polyethylene can be a "tie layer adhesive" which can be applied between the substrate, such as a nylon or a polycarbonate, and the peelable sealant to bind it thereto.

The term "extrudate" refers to the substance which has been forced through the die of an extruder.

The term "peelable heat seal" refers to seals between two areas which are joined when heat is applied to the area wherein the areas can be separated by peeling them apart when stress is applied without tearing or shredding each area.

The term "film" refers to synthetic resinous material having both an upper layer (comprising a blend of the tie layer adhesive and sealant) and a lower layer (comprising the substrate material) which is capable of enclosing a product or entity.

The polybutylene is preferably a film-forming grade composition such as that obtainable from the Shell Chemical Company or that prepared as described in US-A-3,362,940. The polybutylene has a melt index (ASTM D-1238 Condition "E") of 0.1 to 500, preferably 0.4 to 7, more preferably 1 to 3. Most preferably the polybutylene has a melt index of 2±0.5.

The resultant film article can be prepared by any suitable means, such as heat lamination or coextrusion. Coextrusion techniques that can be used for the preparation of the film include those described in US-A-2,480,998.

The invention is now further described in the following Examples. These Examples show that blends of the present invention produce seals having a nearly constant peel strength over extended heat seal temperature ranges.

Example I

Polybutylene (Shell Chemical Co. Duraflex (Trade Mark) PB 8240) having a melt index of about 2 (ASTM D-1238 Condition "E") and a density of about 0.901 $g/cm^3$ was dry blended in a tumble mixer with polypropylene (Shell Chemical Co. PP 5820) and one of several heat sealable copolymers, modified EVA (Note: polybutylene may be melt blended with polypropylene first and the resultant compound can be dry blended with the said modified EVA). The resultant blend was coextruded at a die temperature of about 420°F (216°C) on a Nylon 6 substrate (available from Allied Chemical Co.) through a slot die to produce a cast film, about 4.75 mils (121 m) thick, with a resin blend (See Table 1 for formulation) consisting of about 29 percent of its thickness as the peelable seal layer. After cooling, opposite sides of the samples were heat sealed together with the resin blend layers in face-to-face contact under 40 pounds per square inch (276 kPa) pressure and a dwell time of about half a second. After sealing, one-inch (2.54 cm) wide strips were cut from the film at locations across its width. These samples of the film were sealed at each of several jaw temperatures, and then were subjected to peel strength analysis by pulling across the seal, using a commercial tensile testing device at a 10'/min (3.05 m/min) crosshead speed.

The results are shown in Table 1.

## Table 1

| Substrate | Peel Seal Blend Formulation | Sealing Temp °F(°C) | Peel Strength pounds/in (N/cm) |
|---|---|---|---|
| Nylon 6 | Modified EVA + 6% PB 8240 + 5% PP 5820 | 330 (166) | 0.6 (1.05) |
| | | 350 (177) | 2.4 (4.2 ) |
| | | 370 (188) | 3.5 (6.13) |
| | | 400 (204) | 3.8 (6.65) |
| Nylon 6 | Modified EVA + 8% PB 8240 + 5% PP 5820 | 330 (166) | 0.5 (0.88) |
| | | 350 (177) | 1.8 (3.15) |
| | | 370 (188) | 2.75(4.81) |
| | | 400 (204) | 3.1 (5.43) |
| Nylon 6 | Modified EVA + 10% PB 8240 + 5% PP 5820 | 330 (166) | 0.4 (0.7 ) |
| | | 350 (177) | 1.3 (2.28) |
| | | 370 (188) | 1.9 (3.33) |
| | | 400 (204) | 2.4 (4.38) |

NOTE: Nylon 6 is Allied Chemical Co's CAPRON 8209 F. Modified EVA is Norchem's Plexar 3 having a vinyl acetate content of 9% and MI 3.0 dg/min.

PB 8240 is Shell Chemical Co's Duraflex (Trade Mark) polybutylene having a MI of 2.0 dg/min tested at 190°C. PP 5820 is Shell Chemical Co's polypropylene having a melt flow of 12 dg/min tested at 230°C.

The peel strength for each temperature is the average of the values obtained for the samples tested.

EXAMPLE II

Example I was repeated, except that the substrate was changed from Nylon 6 to polycarbonate and the modified EVA in the peel seal blend in Table 2 was Plexar (Trade Mark). Plexar 326 is essentially a modified ethylene-vinyl acetate copolymer. Table 2 also shows the results of peel seal test.

Table 2

| Substrate | Peel Seal Blend Formulation | Sealing Temp.°F(°C) | Peel Seal Strength Pounds/in(N/cm) |
|---|---|---|---|
| Polycarbonate | Modified EVA + 8% PB 8240 +5% PP 5820 | 260 (127) 280 (138) 300 (149) 320 (160) | 3.0 (5.25) 6.4 (11.2) 8.0 (14) 8.5 (14.88) |
| Polycarbonate | Modified EVA + 10% PB 8240 + 5% PP 5820 | 260 (127) 280 (138) 300 (149) 320 (160) | 3.0 (5.25) 6.2 (10.85) 8.1 (14.18) 9.0 (15.75) |
| Polycarbonate | Modified EVA + 15% PB 8240 + PP 5820 | 260 (127) 280 (138) 300 (149) 320 (160) | 0.3 (0.53) 0.7 (1.23) 0.9 (1.58) 1.2 (2.1 ) |

NOTE: Polycarbonate is GE's Lexan (Trade Mark) J 6862. Modified EVA is Norchem's Plexar (Trade Mark) 326 having an MI of 3.5 dg/min and a high vinyl acetate content. PB 8240 is Shell Chemical Co's Duraflex (Trade Mark) polybutylene having a MI of 2.0 dg/min tested at 190°C. PP 5820 is Shell Chemical Co's polypropylene having a melt flow of 12 dg/min tested at 230°C.

## Claims

1.  A composition suitable for producing a peelable heat seal between substrates, consisting essentially of a blend of:
     a) 6 to 25 percent by weight polybutylene having a melt index of 0.1 to 500;
     b) 2 to 15 percent by weight polypropylene; and

c) 60 to 92 percent by weight of a copolymer of ethylene and vinyl acetate modified with an unsaturated carboxylic acid or anhydride or low density polyethylene modified with an unsaturated carboxylic acid or anhydride.

2. A composition according to claim 1 comprising 8 to 20 percent a), 3 to 10 percent b) and 70 to 89 percent c).

3. A composition according to claim 1 comprising 10 to 20 percent a), 3 to 10 percent b) and 70 to 87 percent c).

4. A composition according to claim 1, 2 or 3 wherein the polybutylene has a melt index of 1 to 3.

5. A composition according to any one of the preceding claims wherein the polybutylene is a butene-1 homopolymer.

6. A heat-sealable film comprising a coextrudate of a substrate which is a nylon or a polycarbonate and a heat sealing composition as claimed in any one of the preceding claims.

**Patentansprüche**

1. Masse, die geeignet ist zur Herstellung einer abziehbaren Heißversiegelung zwischen Substraten, bestehend im wesentlichen aus einem Gemisch aus
   a) 6 bis 25 Gew.-% Polybutylen mit einem Schmelzindex von 0,1 bis 500;
   b) 2 bis 15 Gew.-% Polypropylen und
   c) 60 bis 92 Gew.-% eines Copolymers aus Ethylen und Vinylacetat, modifiziert mit einer ungesättigten Carbonsäure oder einem Anhydrid, oder eines Polyethylens niedriger Dichte, modifiziert mit einer ungesättigten Carbonsäure, oder einem Anhydrid.

2. Masse nach Anspruch 1, umfassend 8 bis 20% a), 3 bis 10% b) und 70 bis 89% c).

3. Masse nach Anspruch 1, umfassend 10 bis 20% a), 3 bis 10% b) und 70 bis 87% c).

4. Masse nach Anspruch 1, 2 oder 3, wobei das Polybutylen einen Schmelzindex von 1 bis 3 besitzt.

5. Masse nach einem der vorangehenden Ansprüche, wobei das Polybutylen ein Buten-1-homopolymer ist.

6. Heißsiegelbarer Film, umfassend ein Coextrudat aus einem Substrat, das ein Nylon oder Polycarbonat ist, und einer Heißversiegelungsmasse nach einem der vorangehenden Ansprüche.

**Revendications**

1. Composition propre à la formation d'un scellement à chaud pelable entre des substrats, consistant essentiellement en un mélange de :
   a) 6 à 25% en poids de polybutylène ayant un indice de fluidité de 0,1 à 500;
   b) 2 à 15% en poids de polypropylène, et
   c) 60 à 92% en poids d'un copolymère d'éthylène et d'acétate de vinyle modifié par un acide ou anhydride carboxylique insaturé ou de polyéthylène basse densité modifié par un acide ou anhydride carboxylique insaturé.

2. Composition suivant la revendication 1, comprenant 8 à 20% de a), 3 à 10% de b) et 70 à 89% de c).

3. Composition suivant la revendication 1, comprenant 10 à 20% de a), 3 à 10% de b) et 70 à 87% de c).

4. Composition suivant la revendication 1, 2 ou 3, dans laquelle le polybutylène a un indice de fluidité de 1 à 3.

5. Composition suivant l'une quelconque des revendications précédentes, dans laquelle le polybutylène est un homopolymère de butène-1.

6. Pellicule scellable à chaud comprenant un corps coextrudé d'un substrat qui est un Nylon ou un polycarbonate et d'une composition de scellement à chaud suivant l'une quelconque des revendications précédentes.

7